# EUROPEAN PATENT SPECIFICATION

(11) **EP 4 397 895 B1**
(45) Date of publication and mention of the grant of the patent: **29.04.2026**
(21) Application number: 22864069.4
(22) Date of filing: 14.07.2022
(51) Int. Cl.: G05D 16/20, F16K 31/04, F16K 31/06, F25B 41/22, F16K 31/50, F16K 41/10, F16K 31/53

(54) **PRESSURE REGULATING VALVE**
DRUCKREGELVENTIL
SOUPAPE DE RÉGULATION DE PRESSION

(30) Priority: 03.09.2021 JP 2021143818
(43) Date of publication of application: 10.07.2024
(73) Proprietor: Fujikoki Corporation, Tokyo 158-0082 (JP)
(72) Inventor: ARAI Yusuke, Tokyo 158-0082 (JP); ASANO Hisashi, Tokyo 158-0082 (JP)
(74) Representative: Ter Meer Steinmeister & Partner
(86) International application number: PCT/JP2022/027658
(87) International publication number: WO 2023/032481

(56) References cited:
- EP-B1- 0 039 000
- EP-B2- 0 220 570
- JP-A- 2001 108 139
- JP-A- 2013 221 640
- JP-A- H0 325 264
- JP-A- H06 300 391
- JP-A- S5 416 760
- JP-A- S5 416 760

## Description

### TECHNICAL FIELD

The present invention relates to a pressure regulating valve which is used in a refrigeration cycle system, and more particularly to an evaporating pressure regulating valve which is provided with a pressure sensitive bellows.

### BACKGROUND ART

In the refrigeration cycle system, an evaporator vaporizes a refrigerant and performs heat exchange with an ambient atmosphere. In this structure, the evaporator may be excessively cooled and a frost is formed in the evaporator when a load is small. Once the front formation is generated, ventilation is shut off by an ice layer and a cooling efficiency is rapidly lowered. Therefore, in order to prevent this phenomenon, an evaporating pressure regulating valve is disposed in an outlet side piping of the evaporator.

This evaporating pressure regulating valve is adapted to prevent the frost formation of the evaporator by throttling an outlet side flow channel of the evaporator and holding the pressure within the evaporator above a certain magnitude, and is provided with a valve main body having a valve chamber which is communicated with an inflow passage and an outflow passage of the refrigerant, a valve body changing a flow rate of the refrigerant by advancing and retreating with respect to a valve seat between a valve-closed state in which the valve body seats on the valve seat formed within the valve chamber and a valve-opened state in which the valve body is spaced apart from the valve seat, and a pressure sensitive member allowing the valve body to advance and retreat by biasing the valve body toward the valve seat and expanding and contracting according to the pressure which the valve body is applied from the refrigerant flowing into from the inflow passage, wherein the outlet side piping of the evaporator is connected to the inflow passage.

The pressure sensitive member is constructed by a bellows and a compression coil spring which is disposed within the bellows. An opening degree of the valve is determined by a balance between a force which the pressure sensitive member presses the valve body (a load in a valve closing direction), and a refrigerant pressure within the inflow passage (an evaporating pressure within the evaporator).
EP 0 220 570 B2 discloses a solenoid operated fluid pressure regulator. EP 0 039 000 B1 discloses a pressure regulator. JP-S54 16760 A discloses an electric vapor pressure regulating valve.

Further, the following patent literature 1 is provided as a literature which discloses the pressure regulating valve as mentioned above.

### CITATION LIST

### PATENT LITERATURE

Patent Literature 1: Japanese Unexamined Patent Publication No. 2015-004395

### SUMMARY OF INVENTION

The pressure regulating valve mentioned above tends to cause variation in its valve opening characteristic while having an advantage that the pressure regulating valve has a simple control structure in which an opening degree of the valve is automatically (mechanically) determined and does not require any complicated control mechanism. In the bellows and the coil spring constructing the pressure sensitive member and determining the valve opening characteristic, it is unavoidable in manufacturing that a certain degree of variation may be generated in its characteristic (stretchability and spring characteristic).

Further, in recent years, there has been a desire to achieve a more optimum temperature control by optionally regulating the temperature of the evaporator (the valve opening characteristic of the pressure regulating valve) to a high temperature side or a low temperature side. For example, it is a case that the load between the evaporators fluctuates according to a change of an operation mode (cooling, heating and dehumidification) and a change of an indoor condition in an air-conditioning system including a plurality of evaporators.

However, it is difficult to respond to the request as mentioned above in the conventional pressure regulating valve. The pressure sensitive member may be provided with an adjust screw adjusting a biasing force, and it is not impossible to change the valve opening characteristic by operating the adjust screw. However, the screw is generally arranged in a valve internal portion (within the refrigerant flow channel) also in the invention described in the patent literature 1, may be operated when manufacturing and shipping, but can not be operated unless the piping is detached, after the screw is embedded in the system.

Therefore, an object of the present invention is to achieve a more flexible and optimum control by allowing the valve opening characteristic of the pressure regulating valve to be changeable as needed.

In order to solve the problem mentioned above and achieve the object, a pressure regulating valve according to the present invention is characterized by the features of claim 1. Preferred embodiments are defined by the subclaims. This pressure regulating valve is a pressure regulating valve including a valve main body having a valve chamber which is communicated with an inflow passage introducing a refrigerant and an outflow passage discharging the refrigerant, a valve body changing a flow rate of the refrigerant by advancing and retreating with respect to a valve seat between a valve-closed state in which the valve body is seated on the valve seat formed within the valve chamber and a valve-opened state in which the valve body is spaced apart from the valve seat, a pressure sensitive member allowing an advancing and retracting movement of the valve body by biasing the valve body toward the valve seat and expanding and contracting according to a pressure which the valve body is applied from the refrigerant flowing into from the inflow passage, and an adjustment means which adjusts a biasing force applied to the valve body of the pressure sensitive member, wherein an actuator driving the adjustment means is provided.

In the pressure regulating valve according to the present invention, the adjustment means for adjusting the biasing force of the pressure sensitive member is provided, and the adjustment means is driven by the actuator. This is because an optimum control of the evaporator can be achieved by driving the adjustment means by the actuator and changing the biasing force (the valve opening characteristic) of the pressure sensitive member as needed. The actuator is an electric motor and constructed by a stepping motor. For example, a servo motor can be used as the actuator, and an encoder can be provided to drive the adjustment means on the basis of a feedback control. The present invention includes such a structure. By using the stepping motor, it is possible to achieve a control (load adjustment of the pressure sensitive member) at a low cost and with a high precision on the basis of an open-loop control which is not associated with a complicated control mechanism.

Further, as a typical structure of the adjustment means, there is a case that the adjustment means includes an adjustment member which is disposed in a base end portion of the pressure sensitive member, and the actuator changes the biasing force by moving the adjustment member in an expanding and contracting direction (a direction for expanding or a direction for contracting) of the pressure sensitive member, when an end portion in a far side from the valve body among both end portions of the pressure sensitive member is called as "base end portion".

Further, the adjustment means has a stopper member which stops the movement of the adjustment member by the actuator and can be set as a starting point when setting the biasing force of the pressure sensitive member. This is performed for allowing the valve opening characteristic (the biasing force of the pressure sensitive member), that is, the evaporating pressure (temperature) of the evaporator to be accurately setting changed. A case that the stepping motor is used as the actuator is exemplified and is concretely described as follows.
(1) First of all, the actuator (the stepping motor) is driven and the adjustment member is moved until it is stopped by the stopper member. Hereinafter, a moving operation of the adjustment member will be called as "initialization", an initialized state is called as "initial state", and a position of the adjustment member in the initial state is called as "initial position", respectively.
(2) Next, the adjustment member is moved by setting the initial position as a starting point and driving the stepping motor to a position having a desired biasing force (an evaporating pressure, this evaporating pressure is called as "first evaporating pressure"). In this period, a distance from the initial position to the position having the desired biasing force (the first evaporating pressure) is measured as the number of drive pulse of the stepping motor, and the measured value (the number of pulse) is saved as a set value (the set value is called as "first set value").
(3) Similarly, a set value corresponding to a desired biasing force (an evaporating pressure, this evaporating pressed is called as "second evaporating pressure") which is different from the first evaporating pressure is measured, this set value being called as "second set value". More specifically, after performing the initializing operation again, the adjustment member is moved until coming to the second evaporating pressure when the initial position is set as the starting point, a distance in this period is measured as the number of drive pulse, and the measured value is saved as the second set value.

Further, the first set value and the second set value are stored in a storage device which is provided in a control part controlling a system (for example, an air-conditioning system of a car air-conditioner or a room air-conditioner, or a freezing and refrigerating system of a freezer refrigerator) using the pressure regulating valve according to the present invention, and the actuator can be drive by the control part. According to this structure, it is possible to set the pressure within the evaporator to the first evaporating pressure and the second evaporating pressure according to the operation state of the system.

Further, by similarly measuring and saving three or more set values (evaporating pressures), that is, a third set value (a third evaporating pressure), a fourth set value (a fourth evaporating pressure), a fifth set value (a fifth evaporating pressure), ..., it is possible to switch the setting of the evaporator (the pressure regulating valve) to three or more evaporating pressures based on three or more set values.

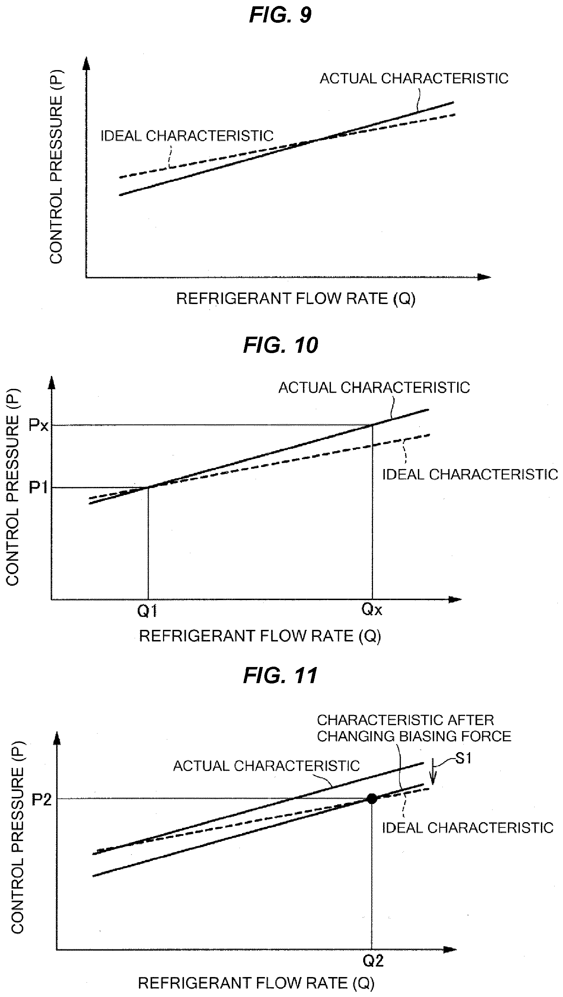

Further describing the present invention, in a mechanical (an internal control type) regulating valve, a control pressure P (a flow rate-pressure characteristic) for a flow rate of a refrigerant Q comes to a straight line having a certain determined slope as shown by a solid line in Fig. 9. Further, in the air-conditioning system, an appropriate control pressure corresponding to each of the operation modes (the cooling, heating and dehumidification) and an indoor condition is required for a comfortable air-conditioning control. Therefore, the regulating valve is designed in such a manner as to achieve a flow rate-pressure characteristic having an ideal gradient as shown by a broken line in Fig. 9 satisfying such a request.

On the contrary, in an actual product, the ideal characteristic can not be necessarily achieved due to dispersion in a dimension and an assembling precision of each of constructing parts when assembling and manufacturing, restriction on a manufacturing cost or deterioration (reduction in durability) of each of the parts caused by a long-time use (aging). Further, even if the product is shipped under a condition that the biasing force of the pressure sensitive member is adjusted to achieve an ideal control pressure P1 in a standard flow rate of a refrigerant Q1 as shown in Fig. 10, all the regulating valves do not necessarily have the ideal characteristic. Therefore, in a case where the regulating valves are embedded in the air-conditioning system, a control pressure Px in a flow rate of a refrigerant Qx deviates from an ideal value (an ideal characteristic shown by a broken line) depending on some operation mode and some indoor condition, thereby a situation may arise in which an optimum air-conditioning control cannot be achieved.

In the present invention, an air-conditioning control closer to an ideal control is achieved in each of the operation modes and the indoor conditions by changing the biasing force by the actuator, by sliding a flow rate-pressure characteristic (a solid line) of the regulating valve in such a manner as to coincide with (or closer to) a control pressure P2 on an ideal characteristic (a broken line) in a flow rate of a refrigerant Q2 as shown in Fig. 11.

Further, in the present invention, an electromagnetic actuator (a solenoid) can be used as the actuator. In particular, the pressure regulating valve according to this aspect includes an adjustment member in which the adjustment means is disposed in a base end portion (an end portion in a far side from the valve body) of the pressure sensitive member, and is provided as the actuator with an electromagnetic actuator (a solenoid) which can generate a suction force attracting the adjustment member in a direction of moving close to the valve body, wherein the biasing force with respect to the valve body of the pressure sensitive member can be changed by changing the suction force.

The suction force (a magnetic force) of the solenoid can be changed, for example, according to a magnitude of an electric current (a drive current) supplied to the solenoid. Further, in a case where the adjustment member is attracted by the suction force in a direction of moving close to the valve body (contracting the pressure sensitive member), a position of the adjustment member is determined by a balance between a resilient force of the pressure sensitive member (a reaction force of the biasing force to the valve body) and the suction force of the solenoid, and the biasing force of the pressure sensitive member to the valve body can be changed by changing the magnitude of the suction force in the solenoid (the magnitude of the drive current applied to the solenoid).

Therefore, by measuring the drive current in which the pressure within the inflow passage comes to a first pressure value (a first evaporating pressure) and setting it to a first set value, measuring the drive current in which the pressure within the inflow passage comes to a second pressure value (a second evaporating pressure) and setting it to a second set value, and saving them, it is possible to change the setting of the pressure regulating valve while using the first set value and the second set value, in the same manner as the case where the electric actuator is used. The number of the set value is not limited to two, and it is possible to change the setting on the basis of three or more set values (a third set value, a fourth set value, ...) in the same manner as the case where the electric actuator is used.

Further, the pressure regulating valve according to the present invention can be constructed as a structure which is provided with a control device for changing the biasing force of the pressure sensitive member as mentioned above.

In particular, the pressure regulating valve is further provided with a control device which controls the actuator, the control device includes a storage portion which stores two or more set values relating to the biasing force, and a control part which drives the adjustment means via the actuator, and the control part drives the adjustment means via the actuator on the basis of the set values which are previously stored in the storage portion, and changes the biasing force of the pressure sensitive member.

Further, in the pressure regulating valve, on the assumption that an end portion in a far side from the valve body among both end portions of the pressure sensitive member is called as a base end portion, the adjustment means may include an adjustment member which is disposed in the base end portion of the pressure sensitive member, the two or more set values may be mutually different information and relate to the position of the adjustment member about the expanding and contracting direction of the pressure sensitive member, and the control part may change the biasing force of the pressure sensitive member by moving the adjustment member via the actuator in the expanding and contracting direction of the pressure sensitive member.

According to the present invention, by allowing the valve opening characteristic of the pressure regulating valve to be changeable as needed, it is possible to achieve a more flexible and optimum temperature control.

The other objects, features and advantages of the present invention are apparent from the following description of embodiments according to the present invention which is given on the basis of the accompanying drawings. In each of the drawings, same reference numerals denote the same or corresponding portions.

### BRIEF DESCRIPTION OF DRAWINGS

Fig. 1 is a vertical cross sectional view showing an evaporating pressure regulating valve in a valve-closed state according to a first embodiment of the present invention.
Fig. 2 is a vertical cross sectional view showing the evaporating pressure regulating valve in a valve-opened state according to the first embodiment.
Fig. 3 is a vertical cross sectional view showing the evaporating pressure regulating valve in an initial state in which an adjustment member is moved down until it is stopped by a stopper member according to the first embodiment.
Fig. 4 is a view of an air-conditioning system in a state in which it constructs a building air-conditioning system and performs a cooling operation as an example provided with the evaporating pressure regulating valve according to the first embodiment, which is shown on a Mollier chart.
Fig. 5 is a view of the air-conditioning system in a state in which it constructs a car air-conditioner and performs a heating and dehumidifying operation as the other example provided with the evaporating pressure regulating valve according to the first embodiment, which is shown on a Mollier chart.
Fig. 6 is a vertical cross sectional view showing an evaporating pressure regulating valve (in a valve-closed state, a state in which an exciting coil is not energized, and a state in which a plunger displaces to an upper limit position) according to a second embodiment of the present invention.
Fig. 7 is a vertical cross sectional view showing the evaporating pressure regulating valve (in a valve-closed state, and a state in which the plunger displaces to a lower limit position where the plunger comes into collision with a suction element) according to the second embodiment.
Fig. 8 is a vertical cross sectional view showing the evaporating pressure regulating valve (in a valve-closed state, and a state in which the plunger is displaced to an intermediate position between the upper limit position and the lower limit position by adjusting a supply current to an exciting coil) according to the second embodiment.
Fig. 9 is a diagram showing a relationship between a flow rate of a refrigerant and a control pressure in a mechanical pressure regulating valve.
Fig. 10 is a diagram showing the relationship between the flow rate of the refrigerant and the control pressure in the mechanical pressure regulating valve, and describes an operation for adjusting a biasing force of the pressure sensitive member when shipping the regulating valve.
Fig. 11 is a diagram showing the relationship between the flow rate of the refrigerant and the control pressure in the mechanical pressure regulating valve, and shows a state in which the biasing force of the pressure sensitive member is changed on the basis of the present invention.
Fig. 12 is a flowchart showing an example of a process which a control part executes for optimally air conditioning each of living spaces in an air-conditioning system provided with the regulating valve according to the first embodiment.

### DESCRIPTION OF EMBODIMENTS

### [First Embodiment]

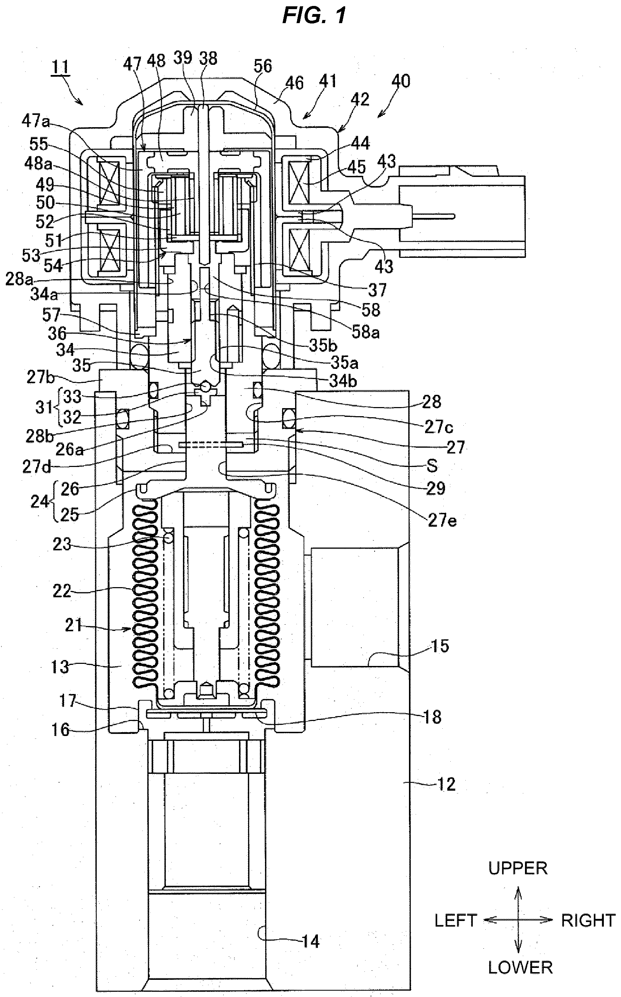

A description will be given of a pressure regulating valve according to a first embodiment of the present invention with reference to Figs. 1 to 5. A pressure regulating valve 11 according to the present embodiment (same applies to a second embodiment mentioned later) is an evaporating pressure regulating valve (hereinafter, refer also to as "pressure regulating valve" or "regulating valve") which is disposed in an outlet side piping of an evaporator of an air-conditioning system and holds the pressure within the evaporator above a certain magnitude. Further, each of the drawings appropriately shows a two-dimensional orthogonal coordinate system indicating each of upper, lower, right and left directions, and the following description will be given on the basis of these directions.

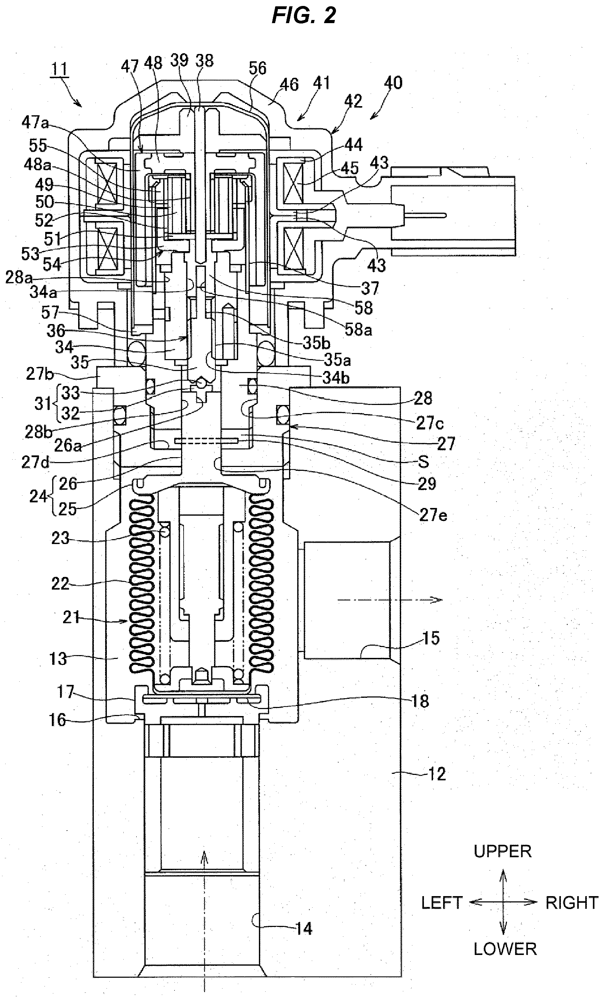

As shown in Figs. 1 and 2, the evaporating pressure regulating valve 11 according to the first embodiment of the present invention is provided with a valve main body 12 having a valve chamber 13 which is communicated with an inflow passage 14 introducing a refrigerant and an outflow passage 15 discharging the refrigerant, a valve body 17 changing a flow rate of the refrigerant by advancing and retracting (moving upward and downward) with respect to a valve seat 16 formed within the valve chamber 13 between a valve-closed state (refer to Fig. 1) in which the valve body 17 comes into contact with the valve seat 16, and a valve-opened state (refer to Fig. 2) in which the valve body 17 is spaced apart from the valve seat 16, a pressure sensitive bellows (a pressure sensitive member, hereinafter simply refer also to as "bellows") 21 which allows the valve body 17 to move up and down by biasing the valve body 17 toward the valve seat 16 and expanding and contracting according to a pressure which the valve body 17 is applied from the refrigerant flowing into from the inflow passage 14, an adjustment member 24 which adjusts a load (a biasing force) applied from the pressure sensitive bellows 21 to the valve body 17, an electric actuator 40 which moves the adjustment member 24 in a vertical direction, an actuator connection member (hereinafter, refer simply to as "connection member") 28 which connects the electric actuator 40 to the valve main body 12 via an upper lid 27 closing an upper portion (an upper surface opening 12a) of the valve chamber 13, and a stopper member 29 which controls (physically or mechanically stops) a downward movement of the adjustment member 24.

Further, the valve chamber 13 is disposed in an intermediate portion of the valve main body 12 in a vertical direction, and the inflow passage 14 communicating with the valve chamber 13 extends vertically upward from a lower surface of the valve main body 12 and is open to a bottom surface portion of the valve chamber 13. Further, the valve seat 16 is formed in an upper edge portion of the inflow passage 14 in which the inflow passage 14 is open to the valve chamber 13. On the other hand, the outflow passage 15 extends horizontally (rightward in Figs. 1 to 2) from a side surface of the valve chamber 13, and is open to a peripheral surface of the valve main body 12.

The pressure sensitive bellows 21 is provided with a bellows main body 22 which is formed into a cylindrical shape having one end opened and other end bottomed and its peripheral wall is formed into a bellows, and a compression coil spring 23 which is accommodated in an inner portion of the bellows main body 22 in a compressed state, and the valve body 17 is connected to a lower end portion of the pressure sensitive bellows 21 via a connection plate 18. Further, an upper surface of the bellows main body 22 is closed by bonding the adjustment member 24. More specifically, the adjustment member 24 has a disc-like flange portion 25, and a guide shaft portion 26 which rises vertically upward from a center portion of the flange portion 25, and closes an upper surface of the bellows main body 22 by welding the flange portion 25 to the upper surface of the bellows main body 22.

The upper lid 27 closing the upper portion of the valve chamber 13 is provided with an upper lid main body 27a which is fixed by being screwed into the upper surface opening 12a of the valve main body 12, and a flange portion 27b which expands horizontally outward from an upper surface portion of the upper lid main body 27a and comes into contact with the upper surface of the valve main body 12, and is a cup-shaped member having one end opened and other end bottomed which has a connection member accommodating hole 27c receiving the connection member 28 in an upper surface side of the upper lid main body 27a. The upper lid 27 has a bottom hole 27e which passes through a bottom plate portion (also called as "upper lid bottom plate portion") of the upper lid main body 27a and allows the guide shaft portion 26 of the adjustment member 28 to slidably insert in a vertical direction, in a center portion of the connection member accommodating hole 27c. Further, a stopper member 29 is disposed between a bottom surface of the connection member accommodating hole 27c (an upper surface of the upper lid bottom plate portion 27d) and a lower surface of the connection member 28, and a space S allowing the stopper member 29 to be movable up and down is formed (this space is called as "stopper configuration space").

In the meantime, the connection member 28 is a tubular member having a large-diameter hole 28a and a small-diameter hole 28b which are mutually communicating through holes. The large-diameter hole 28a passes through an upper portion of the connection member 28, and has a large diameter in such a manner as to allow a bearing member 34 mentioned later to be fitted and inserted into from the above. The small-diameter hole 28b passes through a lower portion of the connection member 28 and has a small diameter. An upper end portion of the guide shaft portion 26 is fitted and inserted into the small-diameter hole 28b from the below so as to be slidable in a vertical direction. In the present embodiment, the upper lid 27, the connection member 28 and the bearing member 34 are fitted and inserted in a nested manner. Thus, the electric actuator 40 is installed in the upper surface portion of the valve main body 12.

The guide shaft portion 26 of the adjustment member 24 passes through the bottom plate portion 27d of the upper lid main body 27a from the upper portion of the valve chamber 13, and an upper end portion thereof is inserted into the small-diameter hole 28b through the stopper configuration space S. The stopper member 29 is installed in an intermediate portion (a portion extending into the stopper configuration space S) of the guide shaft portion 26. The stopper member 29 is a ring member which is fixed to the guide shaft portion 26 so as to protrude to a periphery horizontally (like a flange) from an outer peripheral surface of the guide shaft portion 26 and has a flat C shape. As will be mentioned later in detail, the stopper member 29 performs a function for physically (mechanically) stopping the adjustment member 24 by coming into contact with the upper surface of the upper lid bottom plate portion 27d (the bottom surface of the connection member accommodating hole 27c) when the electric actuator 40 moves the adjustment member 24 downward.

A shape and a configuration of the stopper member 29 are not limited as long as the stopper member 29 has the function for mechanically stopping the adjustment member 24. For example, the stopper member 29 may be constructed by an O-shaped ring member which protrudes outward from an outer peripheral surface of the guide shaft portion 26, a rod-like (pin-like) member or a plate-like member which passes through the guide shaft portion 26 and protrudes out of the outer peripheral surface of the guide shaft portion 26 in one end or both ends.

The electric actuator 40 is constructed by a stepping motor 41, a speed reduction mechanism (a paradox planetary gear speed reduction mechanism) 54 which decelerates the rotation achieved by the stepping motor 41, and a transmission mechanism (a screw feeding mechanism 36) which converts the decelerated rotating motion into a linear motion and transmits to the bellows 21 (the guide shaft portion 26 of the adjustment member 24). The details are as follows.

A cylindrical can 56 which is covered and not bottomed (is opened in a bottom surface and is closed in a top surface) is bonded to an upper end portion of the connection member 28 via a ring-like base plate 57, a stator 42 is disposed in an outer periphery (outer side) of the can 56, and a rotor 47 is rotatably installed in an inner periphery (inner side) of the can 56. The rotor 47 and the stator 42 construct the stepping motor 41.

The stator 42 disposed in the outer side of the can 56 includes a yoke 43, a bobbin 43, a coil 45, and a resin mold cover 46. The rotor 47 disposed in the inner side of the can 56 is constructed by integrally connecting a cylindrical rotor member 47a which is produced by a magnetic material, and a sun gear member 48 which is produced by a resin material. A shaft 38 is inserted into a center portion of the sun gear member 48, and an upper portion of the shaft 38 is supported by a support member 39 which is disposed in an inner side of a top portion of the can 56.

A sun gear 48a of the sun gear mechanism 48 engages with a plurality of planetary gears 49 rotatably supported to a shaft 50 which is disposed in a carrier 51 mounted on a bottom surface of an output gear 53. An upper portion of the planetary gear 49 engages with an annular ring gear (an internal fixed gear) 55 attached to an upper portion of the cylindrical member 37 which is fixed to the upper portion of the connection member 28, and a lower portion of the planetary gear 49 engages with an internal tooth gear 52 of the annular output gear 53. The number of teeth of the ring gear 55 is set to be slightly different from the number of teeth of the internal tooth gear 52 of the output gear 53. Thus, the number of rotation of the sun gear 48a is decelerated with a great deceleration ratio and is transmitted to the output gear 53. The gear mechanisms (the sun gear 48a, the planetary gear 49, the ring gear 55 and the output gear 53) construct the speed reduction mechanism (the paradox planetary gear speed reduction mechanism) 54 which decelerates the rotation of the stepping motor 41 mentioned above.

A tubular bearing member 34 is fitted and inserted into the upper portion of the connection member 28, and is fixed to the connection member 28 by caulking. The output gear 53 is slidably in contact with an upper surface of the bearing member 34. Further, an upper portion of a stepped cylindrical output shaft 58 is pressed into the center of a bottom portion of the output gear 53, and a lower portion of the output shaft 58 is rotatably inserted into an insertion hole 34a which is formed in an upper surface portion of the center portion of the bearing member 34. Further, a lower end portion of the shaft 38 is fitted to the upper portion of the output shaft 58 so as to be relatively rotatable.

A female screw portion 34b is formed in a lower portion of the center portion of the bearing member 34, and a male screw portion 35a formed on an outer peripheral surface of the screw drive member 35 threadably engages with the female screw portion 34b. The bearing member 34 (the female screw portion 34b) and the screw drive member 35 (the male screw portion 35a) construct the transmission mechanism which converts the rotating motion supplied from the stepping motor 41 via the screw feeding mechanism 36 mentioned above, that is, the speed reduction mechanism 54 into the linear motion in the vertical direction and transmits to the bellows 21 (the guide shaft portion 26 of the adjustment member 24).

Here, the output gear 53 performs a rotating motion at a fixed position in the vertical direction without moving up and down, and the rotating motion of the output gear 53 is transmitted to the screw drive member 35 side by inserting a plate-like portion 35b which is disposed in an upper end portion of the screw drive member 35 and has a flat driver shape into a fitting groove 58a which is disposed in a lower end portion of the output shaft 58 connected to the output gear 53 and has a slit shape. The plate-like portion 35b disposed in the screw drive member 35 slides in the vertical direction within the fitting groove 58a of the output shaft 58, so that the output gear 53 (the rotor 47) rotates. Thus, the screw drive member 35 linearly moves in the vertical direction by the feeding mechanism 36 in spite of no linear motion of the output gear 53 in the vertical direction.

The linear motion of the screw drive member 35 is transmitted to the guide shaft portion 26 via a ball-like joint 31 which is constructed by a ball 33, and a ball receiving seat 32 fitted to fitting hole 26a disposed in a center portion of an upper surface of the guide shaft portion 26. The guide shaft portion 26 is (accordingly the adjustment member 24 is also) guided by the small-diameter hole 28b of the connection member 28 and the bottom hole 27e of the upper lid bottom plate portion 27d and moves in the vertical direction.

Here, a description will be briefly given of a motion of the regulating valve 11 according to the present embodiment. When the refrigerant pressure within the evaporator connected to the inflow passage 14 via the piping becomes smaller than a set load of the pressure sensitive bellows 21 biasing the valve body 17, the valve body 17 moves toward the valve seat 16 by being pushed by the biasing force of the pressure sensitive bellows 21, and the flow rate of the refrigerant is reduced. On the contrary, when the refrigerant pressure within the evaporator becomes greater than the set load of the pressure sensitive bellows 21 biasing the valve body 17, the valve body 17 moves in a direction of moving away from the valve seat 16 by being pushed by the refrigerant pressure within the inflow passage 14 (within the evaporator), and the flow rate of the refrigerant is increased.

In order to allow the set load of the pressure sensitive bellows 21 to be changeable by embedding the regulating valve 11 according to the present embodiment in the air-conditioning system and using the stopper member 29, for example, the following processes should be previously performed.

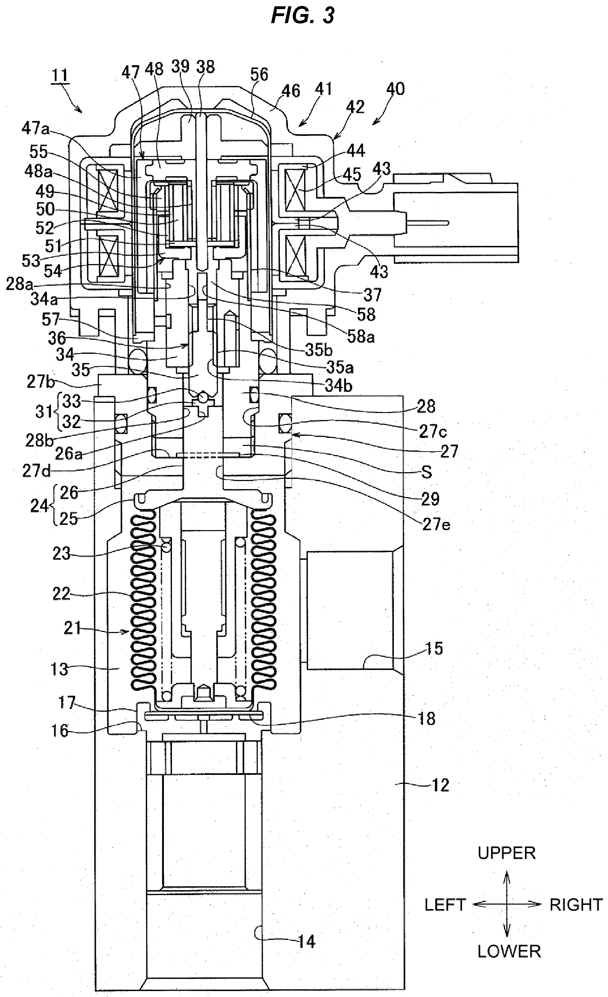

First of all, an initialization operation is performed. In particular, the electric actuator 40 (the stepping motor 41) is driven and the adjustment member 24 is moved downward to an initial position, that is, until the stopper member 29 comes into contact with the bottom surface of the connection member accommodating hole 27c (the upper surface of the upper lid bottom plate portion 27d) as shown in Fig. 3 and the adjustment member 24 is accordingly stopped.

Next, the electric actuator 40 is driven while supplying the refrigerant (or air) to the inflow passage 14 and the adjustment member 24 is moved upward from the initial position until the pressure within the inflow passage 14 comes to a first pressure value (a first evaporating pressure). During the same period, the number of drive pulse of the stepping motor is counted, and the counted value (the number of pulse) is saved as a first set value.

Further, after performing the initialization operation again (after returning the adjustment member 24 to the initial position), the electric actuator 40 is driven while supplying the refrigerant (or air) to the inflow passage 14 in the same manner, and the adjustment member 24 is moved upward until the pressure within the inflow passage 14 comes to a second pressure value (a second evaporating pressure) which is different from the first pressure value (the first evaporating pressure). During the same period, the number of drive pulse of the stepping motor 41 is counted, and the counted value (the number of pulse) is saved as a second set value.

Then, the first set value and the second set value which are obtained by the operation mentioned above are stored in a storage device disposed in a control part which controls a system (for example, an air-conditioning system such as a car air-conditioner and a room air-conditioner, or a freezing ad refrigerating system such as a freezer refrigerator) using the regulating valve 11 according to the present embodiment, and the electric actuator 40 can be drive by the control part. Thus, the refrigerant pressure within the evaporator can be set to the first evaporating pressure and the second evaporating pressure according to an operation condition of the system.

Further, by measuring the number of pulse coming to three or more pressure values (evaporating pressures), that is, a third pressure value (a third evaporating pressure), a fourth pressure value (a fourth evaporating pressure), a fifth pressure value (a fifth evaporating pressure), ..., and respectively saving them as a third set value, a fourth set value, a fifth set value, ..., similarly, it is possible to switch the setting of the evaporator to three of more evaporating pressures on the basis of three or more set values of the regulating valve 11.

Each of the set values mentioned above (each of the evaporating pressures) may be an optional value corresponding to a configuration and an operation condition of the system. A description will be given later of an example in which the regulating valve 11 according to the present embodiment is embedded in the air-conditioning system. In this description, the first set value may be set, for example, to a standard set value mentioned layer, the second set value may be set, for example, to a high temperature side set value mentioned later, and the third set value may be set, for example, to a low temperature set value mentioned later.

Further, in a case where the regulating valve 11 according to the present embodiment is used in the car air-conditioner, each of the set values can be stored in a storage device (ROM (Read Only Memory) or RAM (Random Access Memory) or flash memory) which is mounted to a LIN (Local Interconnect Network) board or separately disposed. Further, in a case where it is used in the room air-conditioner, they can be stored in a similar storage device which is mounted to a control board of the room air-conditioner or separately disposed.

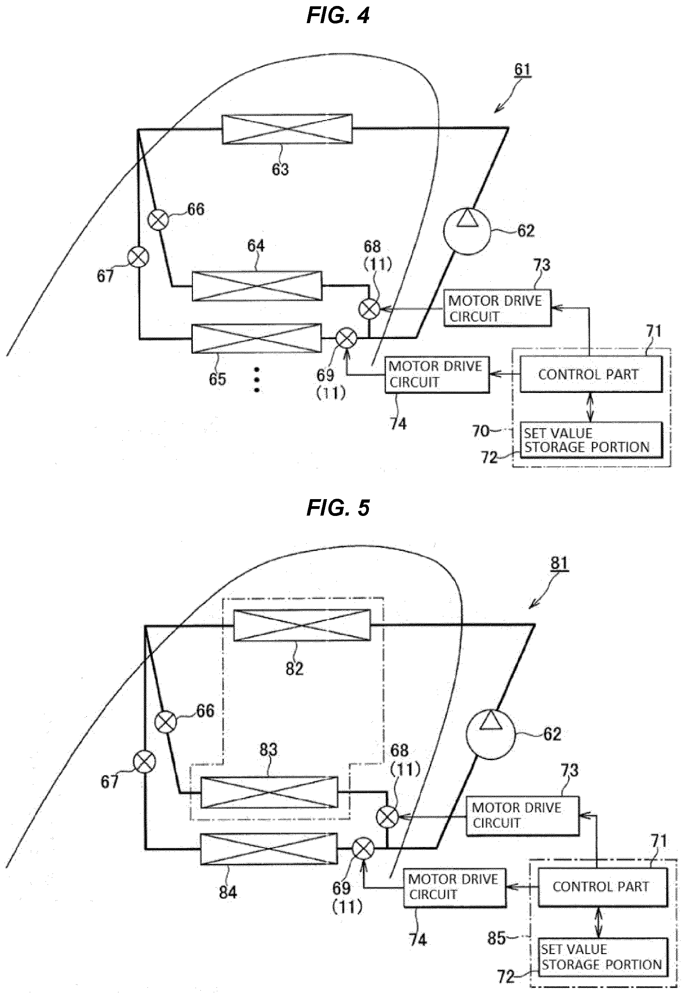

Fig. 4 shows a building air-conditioning system 61 which is provided with the evaporating pressure regulating valve 11 according to the present embodiment. As shown in this drawing, the air-conditioning system 61 is provided with each of elements constructing the refrigeration cycle, that is, a compressor 62 which compresses the refrigerant, an outdoor heat exchanger 63 which is installed outdoor, a first indoor heat exchanger 64 which is installed within a first living space, a second indoor heat exchanger 65 which is installed within a second living space, a first expansion valve 66 which is connected to an inlet side piping of the first indoor heat exchanger 64 (between the outdoor heat exchanger 63 and the first indoor heat exchanger 64), a second expansion valve 67 which is connected to an inlet side piping of the second indoor heat exchanger 65 (between the outdoor heat exchanger 63 and the second indoor heat exchanger 65), a first pressure regulating valve 68 which is connected to an outlet side piping of the first indoor heat exchanger 64 (between the first indoor heat exchanger 64 and the compressor 62), and a second pressure regulating valve 69 which is connected to an outlet side piping of the second indoor heat exchanger 65 (between the second indoor heat exchanger 65 and the compressor 62). Both the first pressure regulating valve 68 and the second pressure regulating valve 69 are constructed by the pressure regulating valve 11 according to the present embodiment.

Further, the system 61 is further provided with a control part 71 which controls the setting of each of the pressure regulating valves 68 and 69 (the biasing force of the pressure sensitive bellows 21), a set value storage portion (a storage device) 72 which stores the set values, and motor drive circuits 73 and 74 which include a pulse transmitter and drive the electric actuator 40 (the stepping motor 41). The control part 71 and the set value storage portion 72 are mounted on the control board 70 of the air-conditioning system 61.

Further, in the set value storage portion 72, there are stored three (three kinds of) set values, that is, a standard set value (this is called as "standard value", and the setting by the standard value is called as "standard setting"), a high temperature side set value for shifting to a higher temperature side than the standard setting (increasing the biasing force of the pressure sensitive bellows 21 for enhancing the refrigerant pressure within the evaporator, that is, positioning the adjustment member 24 below the standard setting) (the setting by the set value is called as "high temperature side setting"), and a low temperature side set value for shifting to a lower temperature side than the standard setting (decreasing the biasing force of the pressure sensitive bellows for lowering the refrigerant pressure within the evaporator, that is, positioning the adjustment member above the standard setting) (the setting by the set value is called as "low temperature side setting").

Fig. 4 shows a state in which the cooling operation is performed. The refrigerant discharged from the compressor 62 flows through a route passing via the outdoor heat exchanger 63, the first expansion valve 66, the first indoor heat exchanger 64 and the first pressure regulating valve 68 in this order and returning to the compressor 62, and a route passing via the outdoor heat exchanger 63, the second expansion valve 67, the second indoor heat exchanger 65 and the second pressure regulating valve 69 in this order and returning to the compressor 62. The outdoor heat exchanger 63 functions as a condenser, and the first indoor heat exchanger 64 and the second indoor heat exchanger 65 both function as an evaporator. Further, the first pressure regulating valve 68 connected to the outlet side piping of the first indoor heat exchanger 64 and the second pressure regulating valve 69 connected to the outlet side piping of the second indoor heat exchanger 65 are assumed to be both set standard.

**In** a case where the cooling load changes in such a manner that the living spaces (the indoor heat exchangers 64 and 65) are greatly different during the cooling operation in the system mentioned above, for example, on the assumption that the number of person staying in the first living space is widely increased and the cooling load of the first indoor heat exchanger 64 becomes large, and the number of person staying in the second living space is widely reduced and the cooling load of the second indoor heat exchanger 65 becomes small, the following situation occurs. More specifically, in the system 61 in Fig. 4, by changing the setting of the second pressure regulating valve 69 to the high temperature side setting and the setting of the first pressure regulating valve 68 to the low temperature side setting, it is possible to more securely prevent the frost formation in the second indoor heat exchanger 65, and it is possible to avoid or suppress occurrent of the situation that the cooling capacity in the first living space having the great cooling load becomes insufficient.

**In** particular, the control part 71 reads the high temperature side set value from the set value storage portion 72, sends a drive pulse corresponding to the high temperature side set value to the second pressure regulating valve 69 via the motor drive circuit 74 and drives the stepping motor 41, after initializing the second pressure regulating valve 69 (moving the adjustment member 24 to the initial position) by driving the stepping motor 41 via the motor drive circuit 74. Thus, the adjustment member 24 moves to the high temperature side setting position from the initial position, and the second pressure regulating valve 69 comes to the high temperature side setting. Further, in the same manner, the control part 71 reads the low temperature side set value from the set value storage portion 72, sends a drive pulse corresponding to the low temperature side set value to the first pressure regulating valve 68 via the motor drive circuit 73 and drives the stepping motor 41, after initializing the first pressure regulating valve 68 by driving the stepping motor 41 via the motor drive circuit 73. Thus, the adjustment member 24 moves to the low temperature side setting position from the initial position and the first pressure regulating valve 68 comes to the low temperature side setting.

The setting change by the control part 71 may be automatically, that is, the control part 71 may automatically execute the setting change on the basis of a detected signal from a sensor (for example, a temperature sensor detecting an air temperature within the living space or a human detecting sensor detecting the number of person staying in the room, not illustrated), or the setting change may be executed by a manual operation, that is, an input operation from an input device (for example, a remote control device (so-called remote controller, not illustrated).

Further, only two indoor heat exchangers are illustrated in Fig. 4. However, a greater number of (three or more) indoor heat exchangers (expansion valves and pressure regulating valves) may be provided, and these indoor heat exchangers can be controlled (changed setting) by the control part 71 in the same manner as the first indoor heat exchanger (the first pressure regulating valve) and the second indoor heat exchanger (the second pressure regulating valve).

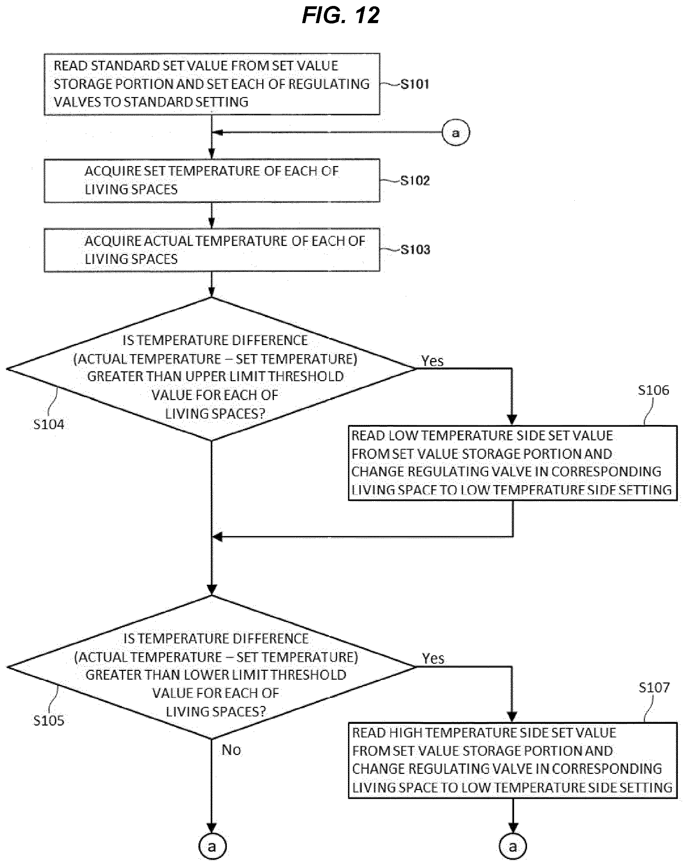

Further, Fig. 12 shows an example of a processing flow for optimally air-conditioning controlling each of the living spaces in the air-conditioning system as shown in Fig. 4. In this example, in order to suppress a difference (a temperature difference) between an actually measured temperature (an actual temperature) within the living space and a set temperature to a fixed temperature range, the control part is adapted to acquire the set temperature and the actual temperature of each of the living spaces (for example, via an indoor communication line) as well as previously storing an upper limit threshold value (an upper limit value of the temperature difference) and a lower limit threshold value (a lower limit value of the temperature difference) in the set value storage portion, in addition to the standard value (the standard set value), the high temperature side set value and the low temperature side set value.

In the processing achieved by the control part, the control part reads the standard set value from the set value storage portion and sets the regulating value of each of the living spaces to a standard one first of all (for example, when the power supply of the air-conditioning system is turned on) (step S101). Next, the control part acquires the set temperature of each of the living spaces rooms (step S102), and acquires the actual temperature of each of the living spaces rooms (step S103).

Then, the control part compares the difference (the temperature difference) between the actual temperature and the set temperature with the upper limit threshold value for each of the living spaces (step S104), and changes the regulating value of the living space (the living space in which the temperature difference becomes greater than the upper limit threshold value) to the low temperature side setting in a case where the temperature difference is greater than the upper limit threshold value (step S106). For example, if the set temperature is "22 °C" and the actual temperature is "26 °C" in a case where the upper limit threshold value is set to "3 °C", and the lower limit threshold value is set to "-3 °C", the temperature difference (+ 4 °C) is greater than the upper limit threshold value (3 °C). Therefore, the change to the low temperature side setting is performed by the control part.

On the contrary, in a case where the temperature difference does not go beyond the upper limit threshold value (there is no living space in which the temperature difference goes beyond the upper limit threshold value), and after the setting change to the low temperature side (step S106) is finished, the temperature difference and the lower limit threshold value are compared for each of the living spaces (step S105). Then, in a case where the temperature difference is smaller than the lower limit threshold value, the regulating valve of the living space (the living space in which the temperature difference becomes smaller than the lower threshold value) is changed to the high temperature side setting (step S107). For example, if the set temperature is "25 °C" and the actual temperature is "20 °C" in a case where the upper limit threshold value is set to "3 °C", and the lower limit threshold value is set to "-3 °C", the temperature difference (- 5 °C) is smaller than the lower limit threshold value (-3 °C). Therefore, the change to the high temperature side setting is performed by the control part.

On the other hand, in a case where the temperature difference does not become smaller than the lower limit threshold value (there is no living space in which the temperature difference becomes smaller than the lower limit threshold value), and after the setting change to the high temperature side (step S107) is finished, the step goes back to the step S102 of acquiring the set temperature of each of the living spaces.

The control part repeats the processes (steps S102 to S107) as mentioned above for a fixed time interval (for example, every five minutes or every ten minutes). Thus, it is possible to achieve a good air-conditioning control in which the actual room temperature of each of the living spaces is within a fixed error range (between the upper limit threshold value and the lower limit threshold value) from the set temperature.

The example mentioned above is adapted to regulate the biasing force for every one stage to the high temperature side and the lower temperature side by the provision of one threshold value and one set value in each of the high temperature side and the low temperature side. However, the biasing force of the pressure sensitive bellows can be changed in multiple stages by setting a plurality of threshold values and set values in each of the high temperature side and the low temperature side, thereby performing a finer control.

Further, it is possible to change the setting of the biasing force of the pressure sensitive bellows according to the number of person staying in the living space with the use of the human detecting sensor, in place of the temperature, for example, according to the difference in the number of person (the difference between the number of person actually staying in the space and the previously determined number of capacity in the living space) in place of the temperature difference.

Fig. 5 shows a car air-conditioner system 81 which is provided with the evaporating pressure regulating valve according to the present embodiment. The air-conditioning system 81 is provided with each of elements constructing a heat pump cycle, that is, a compressor 62, a first cabin indoor heat exchanger 82 which is installed within a vehicle interior, a second cabin indoor heat exchanger 83 which is installed within the vehicle interior, a cabin outdoor heat exchanger 84 which is installed out of the vehicle interior, a first expansion valve 66 which is connected to an inlet side piping of the second cabin indoor heat exchanger 83 (between the first cabin indoor heat exchanger 82 and the second cabin indoor heat exchanger 83), a second expansion valve 67 which is connected to an inlet side piping of the cabin outdoor heat exchanger 84 (between the first cabin indoor heat exchanger 82 and the cabin outdoor heat exchanger 84), a first pressure regulating valve 68 which is connected to an outlet side piping of the second cabin indoor heat exchanger 83 (between the second cabin indoor heat exchanger 83 and the compressor 62), and a second pressure regulating valve 69 which is connected to an outlet side piping of the cabin outdoor heat exchanger 84 (between the cabin outdoor heat exchanger 84 and the compressor 62).

Further, this is the same as the building air-conditioning system 61 shown in Fig. 4, in a point that the first pressure regulating valve 68 and the second pressure regulating valve 69 are both constructed by the pressure regulating valve 11 according to the present embodiment, and the system 81 is provided with the control part 71 which controls the setting of each of the pressure regulating valves 68 and 69, the set value storage portion 72 which stores the set values, and the motor drive circuits 73 and 74 which include the pulse transmitter and drive the electric actuator 40 (the stepping motor 41). The control part 71 and the set value storage portion 72 are mounted on a LIN (Local Interconnect Network) board 85 in the present embodiment. Further, in the present system 81, the standard value, the high temperature side set value and the low temperature side set value are previously stored in the setting storage portion, and the first pressure regulating valve 68 and the second pressure regulating valve 69 are both set to the standard setting initially.

Further, the refrigerant discharged from the compressor 62 flows through a route passing via the first cabin indoor heat exchanger 82, the first expansion valve 66, the second cabin indoor heat exchanger 83 and the first pressure regulating valve 68 in this order and returning to the compressor 62, and a route passing via the first cabin indoor heat exchanger 82, the second expansion valve 67, the cabin outdoor heat exchanger 84 and the second pressure regulating valve 69 in this order and returning to the compressor 62. The first indoor heat exchanger 82 functions as a condenser, and the second cabin indoor heat exchanger 83 and the cabin outdoor heat exchanger 84 both function as an evaporator. Further, the second cabin indoor heat exchanger 83 functioning as the evaporator is adapted to achieve a dehumidification function by being arranged in an air blowing route for hot air which is heat exchanged by the first cabin indoor heat exchanger 82 and heated.

**In** the system 81 mentioned above, for example, assuming that a warming and dehumidification operation is performed for heating and simultaneously defogging a vehicle window at rainfall time and snowfall time during the winter season, the second cabin indoor heat exchanger 83 becomes lower temperature and can enhance the dehumidification function by changing the setting of the first pressure regulating valve 68 to the low temperature side setting in the system 81 of Fig. 5. Further, by changing the setting of the second pressure regulating valve to the high temperature side setting, it is possible to more securely prevent the frost formation of the cabin outdoor heat exchanger 84 which is installed in an outer side of the vehicle interior, is exposed to the ambient air and tends to form frost.

**In** particular, the control part 71 initializes the first pressure regulating valve by driving the stepping motor 41 via the motor drive circuit 73 (moves the adjustment member 24 to the initial position), thereafter reads the low temperature side set value from the set value storage portion 72, sends the drive pulse corresponding to the low temperature side set value to the first pressure regulating valve 68 via the motor drive circuit 73, and drives the stepping motor 41. Thus, the adjustment member 24 moves to the low temperature side setting position from the initial position, and the first pressure regulating valve 68 comes to the low temperature side setting. Further, the control part 71 initializes the second pressure regulating valve by driving the stepping motor 41 via the motor drive circuit 74, thereafter reads the high temperature side set value from the set value storage portion 72, sends the drive pulse corresponding to the high temperature set value to the second pressure regulating valve 69 via the motor drive circuit 74, and drives the stepping motor 41. Thus, the adjustment member 24 moves to the high temperature side setting position from the initial position, and the second pressure regulating valve 69 comes to the high temperature side setting.

### [Second Embodiment]

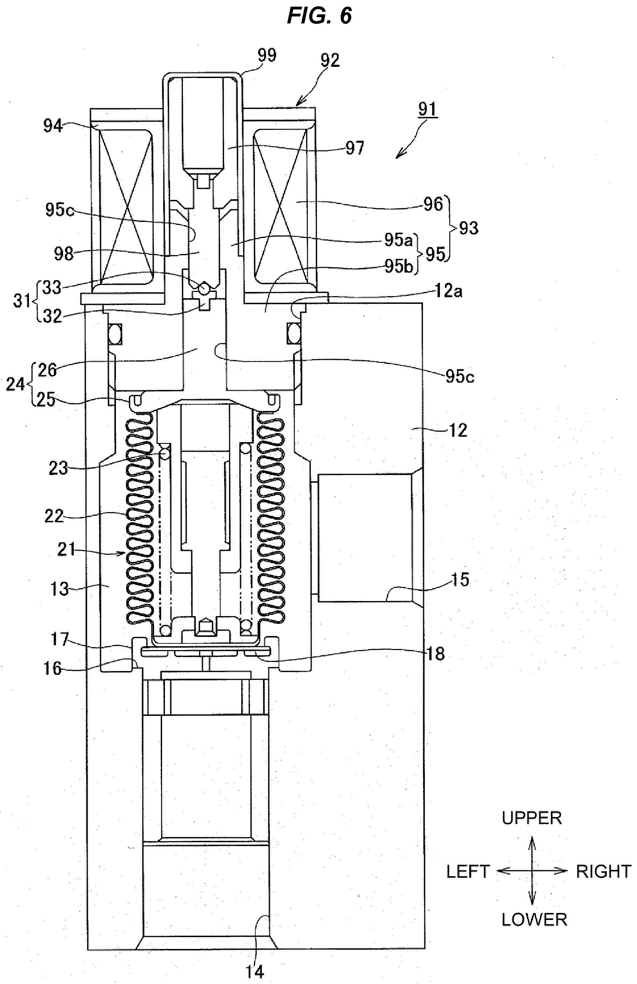

A description will be given of a pressure regulating valve according to a second embodiment of the present invention with reference to Figs. 6 to 8. As shown in Figs. 6 to 8, a regulating valve 91 according to the present embodiment is provided with the valve main body 12, the valve body 17 and the pressure sensitive bellows 21 in the same manner as the regulating valve 11 according to the first embodiment, and has the valve chamber 13, the valve seat 16, the inflow passage 14 and the outflow passage 15. However, this regulating valve 91 uses an electromagnetic actuator 92 as an actuator for displacing the adjustment member 24, in place of the electric actuator. Hereinafter, an overlapping description will be omitted by attaching the same reference numerals to the same configurations as those of the regulating valve 11 according to the first embodiment, and a description will be given mainly of different points.

The electromagnetic actuator 92 has a solenoid 93, a plunger (a moving core) 97, and a thrust transmission member 98 which connects the plunger 97 and adjustment member 24 and transmits an up-and-down motion of the plunger 97 to the adjustment member 24 via the ball-like joint 31 (the ball 33 and the ball receiving seat 32). The solenoid 93 has an exciting coil 96, and a suction element (a fixed core) 95 which attracts the plunger 97. The exciting coil 96 has a bobbin 94 which has a tubular portion in its center, and is arranged within the tubular portion of the bobbin 94 in a state in which an upper portion (a suction element main body portion 95a) of the suction element 95 and the plunger 97 are accommodated in a sleeve 99.

The suction element 95 is constructed by the suction element main body portion 95a which attracts the plunger 97 and has a columnar shape, and a disc-like upper lid portion 95b which closes the upper portion of the valve chamber 13, and the suction element main body portion 95a and the upper lid portion 95b are integrally formed. The upper lid portion 95b is fixed to the valve main body 12 by being screwed into the upper surface opening 12a of the valve main body 12 in the same manner as the upper lid 27 according to the first embodiment, so that the upper portion of the valve chamber 13 is closed.

Further, a through hole 95c extending in a vertical direction is formed in a center portion of the suction element 95, the thrust transmission member 98 is fitted and inserted into an upper portion of the through hole 95c so as to be slidable in the vertical direction, and the guide shaft portion 26 of the adjustment member 24 is fitted and inserted into a lower portion of the through hole 95c so as to be slidable in the vertical direction. Further, the ball-like joint 31 constructed by the ball 33 and the ball receiving seat 32 is interposed between the thrust transmission member 98 and the guide shaft portion 26. Thus, a thrust toward a lower side of the thrust transmission member 98 generated by a downward movement of the plunger 97 is transmitted to the guide shaft portion 26, and a resilient force toward an upper side of the pressure sensitive bellows 21 (a reaction force to the biasing force toward the valve body 17) and a force toward an upper side of the guide shaft portion 26 in association with an upward movement of the valve body 17 are transmitted to the thrust transmission member 98.

The regulating valve 91 according to the present embodiment is provided in an upper surface portion of the bellows 21 with the same adjustment member 24 as the first embodiment but is not provided in the guide shaft portion 26 with a stopper member.

In a state in which the exciting coil 96 is not energized, there is formed a state in which the valve body 17 is pressed to the valve seat 16, the adjustment member 24 (the flange portion 25) is pressed to the lower surface of the upper lid portion 95b and the plunger 97 is pressed to a lower surface of a top plate portion of the sleeve 99 (the position of the plunger 97 is called as "upper limit position") by the resilient force of the pressure sensitive bellows 21 as shown in Fig. 6.

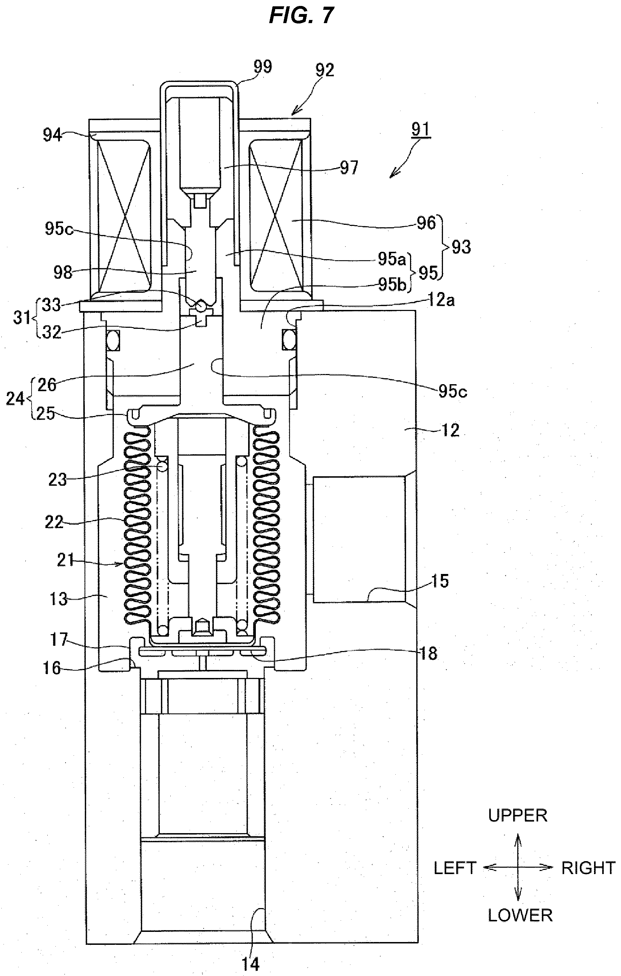

On the contrary, when the exciting coil 96 is energized, the suction element 95 sucks the plunger 97 against the resilient force of the pressure sensitive bellows 21 as shown in Fig. 7, and the adjustment member 24 is pressed downward via the thrust transmission member 98 and the ball-like joint 31. The position of the plunger shown in Fig. 7 is called as "lower limit position".

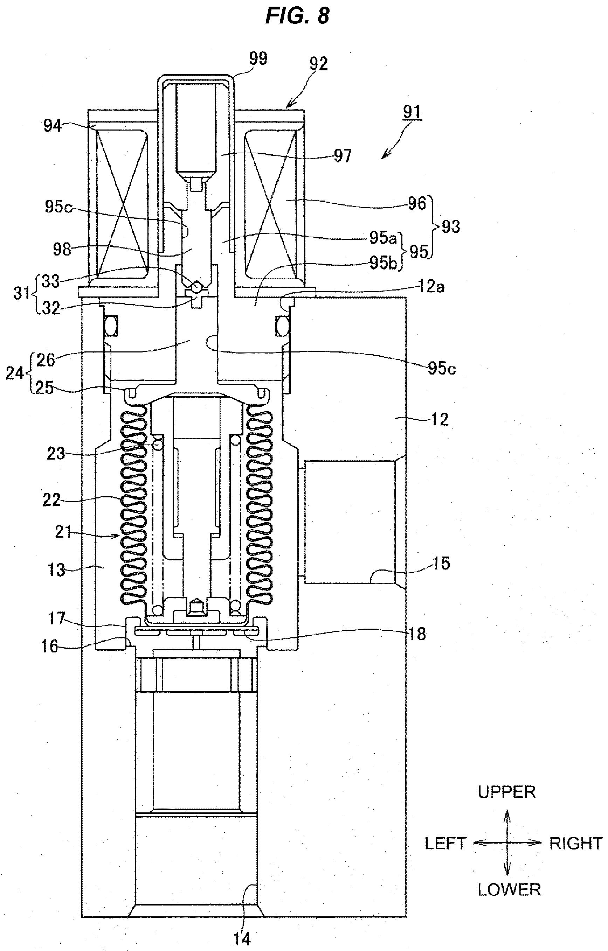

Here, a stop position of the plunger 97, that is, a position of the adjustment member 24 in the vertical direction is determined by a balance of the upward resilient force of the pressure sensitive bellows 21 (the reaction force of the biasing force toward the valve body 17), and a suction force (a magnitude of a drive current supplied to the solenoid 93) of the solenoid 93 (the suction element 95). More specifically, when the suction force (the strength of the magnetic force) of the suction element 95 is sufficiently large, the plunger 97 moves down to a lower limit position where the plunger 97 comes into collision with the suction element as shown in Fig. 7. However, the plunger 97 (the adjustment member 24) can be stopped at an optional intermediate position between the upper limit position shown in Fig. 6 and the lower limit position shown in Fig. 7 by adjusting the drive current supplied to the exciting coil 96 and weakening the suction force of the suction element 95 (refer to Fig. 8).

Therefore, the control part can be used by measuring the magnitude of the drive current by which the pressure within the inflow passage 14 comes to the first pressure value (the first evaporating pressure) and setting it to the first set value, measuring the magnitude of the drive current by which the pressure within the inflow passage 14 comes to the second pressure value (the second evaporating pressure) and setting it to the second set value, and storing the first set value and the second set value in the set value storage portion of the system (the air-conditioning system), in the same manner as the first embodiment. In this case, the control part can change the magnitude of the electric current supplied to the exciting coil 96 on the basis of each of the set values and can perform the setting change of the pressure regulating valve 91.

The number of the set value is not limited to two, but the setting change can be performed on the basis of three or more set values (the third set value, the fourth set value, ...) in the same manner as the first embodiment.

The description is given above of the embodiments according to the present invention. However, it is apparent for a person skilled in the art that the present invention is not limited to them and can be variously changed within the scope of claims.

For example, the initialization is performed by bringing the stopper member 29 into contact with the bottom surface of the connection member accommodating hole 27c (the upper surface of the upper lid bottom plate portion 27d) in the first embodiment. However, the operation can achieve the purpose thereof as long as the operation can mechanically stop the adjustment member 24. Therefore, a place where the stopper member 29 is brought into contact may be the other places (the other members or portion) within the regulating valve.

### REFERENCE SIGNS LIST

11, 91 evaporating pressure regulating valve
12 valve main body
12a upper surface opening
13 valve chamber
14 inflow passage
15 outflow passage
16 valve seat
17 valve body
18 connection plate
21 pressure sensitive bellows
22 bellows main body
23 compression coil spring
24 adjustment member
25 flange portion
26 guide shaft portion
26a fitting hole
27 upper lid
27a upper lid main body
27b flange portion
27c connection member accommodating hole
27d upper lid bottom plate portion
27e bottom hole
28 actuator connection member
28a large-diameter hole
28b small-diameter hole
29 stopper member
31 ball-like joint
32 ball receiving seat
33 ball
34 bearing member
34a insertion hole
34b female screw portion
35 screw drive member
35a male screw portion
35b plate-like portion
36 screw feeding mechanism
37 cylindrical member
38 shaft
39 support member
40 electric actuator
41 stepping motor
42 stator
43 yoke
44 bobbin
45 coil
46 resin mold cover
47 rotor
47a rotor member
48 sun gear member
48a sun gear
49 planetary gear
50 shaft
51 carrier
52 internal tooth gear
53 output gear
54 speed reduction mechanism (paradox planetary gear speed reduction mechanism)
55 ring gear (internal fixed gear)
56 can
57 base plate
58 output shaft
58a fitting groove
61 building air-conditioning system
62 compressor
63 outdoor heat exchanger
64 first indoor heat exchanger
65 second indoor heat exchanger
66 first expansion valve
67 second expansion valve
68 first pressure regulating valve
69 second pressure regulating valve
70 control board
71 control part
72 set value storage portion (storage device)
73, 74 motor drive circuit
81 car air-conditioner system
82 first cabin indoor heat exchanger
83 second cabin indoor heat exchanger
84 cabin outdoor heat exchanger
85 LIN board
92 electromagnetic actuator
93 solenoid
94 bobbin
95 suction element
95a suction element main body portion
95b upper lid portion
95c through hole
96 exciting coil
97 plunger (moving core)
98 thrust transmission member
99 sleeve
S stopper configuration space

## Claims

1. A pressure regulating valve (11, 91) comprising:
a valve main body (12) having a valve chamber (13) in fluid communication with an inflow passage (14) configured to introduce a refrigerant and an outflow passage (15) configured to discharge the refrigerant;
a valve body (17) configured to change a flow rate of the refrigerant by advancing and retreating with respect to a valve seat (16) between a valve-closed state in which the valve body (17) is seated on the valve seat formed within the valve chamber (13) and a valve-opened state in which the valve body (17) is spaced apart from the valve seat (16);
a pressure sensitive member configured to allow an advancing and retracting movement of the valve body (17) by biasing the valve body (17) toward the valve seat (16) and being configured to expand and contract according to a pressure which the valve body (17) is applied from the refrigerant flowing into from the inflow passage (14);
an adjustment means configured to adjust a biasing force applied to the valve body (17) of the pressure sensitive member; and
an actuator (40) configured to drive the adjustment means,
wherein when an end portion in a far side from the valve body (17) among both end portions of the pressure sensitive member is called as a base end portion,
the adjustment means includes an adjustment member (24) which is disposed in the base end portion of the pressure sensitive member,
wherein the actuator (40) is configured to change the biasing force by moving the adjustment member (24) in an expanding and contracting direction of the pressure sensitive member, and
wherein the adjustment means is provided with a stopper member (29) which is configured to mechanically stop the movement of the adjustment member (24) by the actuator (40) and can be set as a starting point when setting the biasing force,
**characterized in that** the actuator (40) includes a stepping motor (41) which drives the adjustment means, and
the actuator (40) is configured to change the biasing force by first moving the adjustment member (24) until it is stopped by the stopper member (29) and then by driving the stepping motor (41) to a position having a desired biasing force.

2. The pressure regulating valve (11, 91) according to claim 1 , further comprising a control device which is configured to control the actuator (40),
wherein the control device comprises:
a storage portion (72) which is configured to store two or more set values relating to the biasing force; and
a control part (71) which is configured to drive the adjustment means via the actuator (40),
wherein the control part is configured to drive the adjustment means via the actuator (40) on the basis of the set values which are previously stored in the storage portion, and to change the biasing force of the pressure sensitive member.

3. The pressure regulating valve (11, 91) according to claim 2, wherein when an end portion in a far side from the valve body (17) among both end portions of the pressure sensitive member is called as a base end portion,
the adjustment means includes an adjustment member (24) which is disposed in the base end portion of the pressure sensitive member,
wherein the two or more set values are mutually different information relating to the position of the adjustment member (24) about the expanding and contracting direction of the pressure sensitive member, and
wherein the control part is configured to change the biasing force by moving the adjustment member (24) via the actuator (40) in the expanding and contracting direction of the pressure sensitive member.

4. The pressure regulating valve (11, 91) according to claim 1, wherein the actuator (40) includes a screw feeding mechanism (36) which is configured to convert a rotating motion supplied from the electric motor via a speed reduction mechanism into a liner motion,
wherein the screw feeding mechanism comprises:
a bearing member (34) which has a female screw portion (34b) and is fixed to the valve main body side; and
a drive member (35) which has a male screw portion (35a) threadably engaging with the female screw portion and performs a rotating motion and a liner motion,
wherein the adjustment member (24) comprises a guide shaft portion (26) which is configured to perform a linear motion without rotating by the transmission of the liner motion of the drive member, and
wherein the stopper member is fixed to the guide shaft portion.

## Patentansprüche

1. Druckregelventil (11, 91), umfassend:
einen Ventilhauptkörper (12) mit einer Ventilkammer (13) in Fluidverbindung mit einem Einströmkanal (14), der zum Einleiten eines Kältemittels konfiguriert ist, und einem Ausströmkanal (15), der zum Ablassen des Kältemittels konfiguriert ist;
einen Ventilkörper (17), der zum Ändern einer Strömungsrate des Kältemittels durch Vorschieben und Zurückziehen in Bezug auf einen Ventilsitz (16) zwischen einem geschlossenen Ventilzustand, in dem der Ventilkörper (17) auf dem Ventilsitz sitzt, der in der Ventilkammer (13) ausgebildet ist, und einem geöffneten Ventilzustand, in dem der Ventilkörper (17) von dem Ventilsitz (16) beabstandet ist, konfiguriert ist;
ein druckempfindliches Element, das zum Ermöglichen einer Vorschieb- und Rückzugsbewegung des Ventilkörpers (17) durch Vorspannen des Ventilkörpers (17) in Richtung des Ventilsitzes (16) konfiguriert ist und zum Ausdehnen und Zusammenziehen gemäß einem Druck, der auf den der Ventilkörper (17) von dem Kältemittel, das von dem Einströmkanal (14) einströmt, ausgeübt wird, konfiguriert ist;
ein Einstellmittel, das zum Einstellen einer Vorspannkraft, die auf den Ventilkörper (17) des druckempfindlichen Elements ausgeübt wird, konfiguriert ist; und
einen Aktuator (40), der zum Antreiben des Einstellmittels konfiguriert ist,
wobei, wenn ein Endabschnitt auf einer von dem Ventilkörper (17) entfernten Seite von beiden Endabschnitten des druckempfindlichen Elements als Basisendabschnitt bezeichnet wird,
das Einstellmittel ein Einstellelement (24) beinhaltet, das in dem Basisendabschnitt des druckempfindlichen Elements angeordnet ist,
wobei der Aktuator (40) zum Ändern der Vorspannkraft durch Bewegen des Einstellelements (24) in einer Ausdehn- und Zusammenziehrichtung des druckempfindlichen Elements konfiguriert ist, und
wobei das Einstellmittel mit einem Anschlagelement (29) versehen ist, das zum mechanischen Stoppen der Bewegung des Einstellelements (24) durch den Aktuator (40) konfiguriert ist und als Startpunkt beim Einstellen der Vorspannkraft eingestellt werden kann,
**dadurch gekennzeichnet, dass** der Aktuator (40) einen Schrittmotor (41) beinhaltet, der das Einstellmittel antreibt, und
der Aktuator (40) zum Ändern der Vorspannkraft durch anfängliches Bewegen des Einstellelements (24), bis es durch das Anschlagelement (29) gestoppt wird, und anschließendes Antreiben des Schrittmotors (41) zu einer Position mit einer gewünschten Vorspannkraft konfiguriert ist.

2. Druckregelventil (11, 91) nach Anspruch 1, ferner umfassend eine Steuervorrichtung, die zum Steuern des Aktuators (40) konfiguriert ist,
wobei die Steuervorrichtung umfasst:
einen Speicherabschnitt (72), der zum Speichern von zwei oder mehr Sollwerten in Bezug auf die Vorspannkraft konfiguriert ist; und
ein Steuerteil (71), das zum Antreiben des Einstellmittels über den Aktuator (40) konfiguriert ist,
wobei das Steuerteil zum Antreiben des Einstellmittels über den Aktuator (40) auf der Basis der zuvor in dem Speicherabschnitt gespeicherten Sollwerte und zum Ändern der Vorspannkraft des druckempfindlichen Elements konfiguriert ist.

3. Druckregelventil (11, 91) nach Anspruch 2, wobei, wenn ein Endabschnitt auf einer von dem Ventilkörper (17) entfernten Seite von beiden Endabschnitten des druckempfindlichen Elements als Basisendabschnitt bezeichnet wird,
das Einstellmittel ein Einstellelement (24) beinhaltet, das in dem Basisendabschnitt des druckempfindlichen Elements angeordnet ist,
wobei die zwei oder mehr Sollwerte voneinander verschiedene Informationen in Bezug auf die Position des Einstellelements (24) über die Ausdehn- und Zusammenziehrichtung des druckempfindlichen Elements sind, und
wobei das Steuerteil zum Ändern der Vorspannkraft durch Bewegen des Einstellelements (24) über den Aktuator (40) in der Ausdehn- und Zusammenziehrichtung des druckempfindlichen Elements konfiguriert ist.

4. Druckregelventil (11, 91) nach Anspruch 1, wobei der Aktuator (40) einen Schraubenvorschubmechanismus (36) beinhaltet, der zum Umwandeln einer Drehbewegung, die von dem Elektromotor über einen Drehzahlreduzierungsmechanismus zugeführt wird, in eine lineare Bewegung konfiguriert ist,
wobei der Schraubenvorschubmechanismus umfasst:
ein Lagerelement (34), das einen Innengewindeabschnitt (34b) aufweist und an der Ventilhauptkörperseite befestigt ist; und
ein Antriebselement (35), das einen Außengewindeabschnitt (35a) aufweist, der mit dem Innengewindeabschnitt in Gewindeeingriff steht und eine Drehbewegung und eine lineare Bewegung ausführt,
wobei das Einstellelement (24) einen Führungswellenabschnitt (26) umfasst, der zum Ausführen einer linearen Bewegung ohne Drehen durch die Übertragung der linearen Bewegung des Antriebselements konfiguriert ist, und
wobei das Anschlagelement an dem Führungswellenabschnitt befestigt ist.

## Revendications

1. Soupape de régulation de pression (11, 91) comportant :
un corps principal de soupape (12) ayant une chambre de soupape (13) en communication fluidique avec un passage d'écoulement d'entrée (14) configuré pour introduire un fluide frigorigène et un passage d'écoulement de sortie (15) configuré pour évacuer le fluide frigorigène ;
un corps de soupape (17) configuré pour changer un débit du fluide frigorigène en avançant et en reculant par rapport à un siège de soupape (16) entre un état de soupape fermé dans lequel le corps de soupape (17) est en appui sur le siège de soupape formé à l'intérieur de la chambre de soupape (13), et un état de soupape ouvert dans lequel le corps de soupape (17) est espacé du siège de soupape (16) ;
un élément sensible à la pression configuré pour permettre un mouvement d'avance et de recul du corps de soupape (17) en rappelant le corps de soupape (17) vers le siège de soupape (16) et étant configuré pour se dilater et se contracter en fonction d'une pression appliquée au corps de soupape (17) à partir du fluide frigorigène qui s'écoule à partir du passage d'écoulement d'entrée (14) ;
des moyens de réglage configurés pour régler une force de rappel appliquée au corps de soupape (17) de l'élément sensible à la pression ; et
un actionneur (40) configuré pour entraîner les moyens de réglage,
dans lequel, lorsqu'une portion d'extrémité située dans un côté éloigné du corps de soupape (17) parmi les deux portions d'extrémité de l'élément sensible à la pression est appelée portion d'extrémité de base,
les moyens de réglage incluent un élément de réglage (24) qui est disposé dans la portion d'extrémité de base de l'élément sensible à la pression,
dans lequel l'actionneur (40) est configuré pour changer la force de rappel en déplaçant l'élément de réglage (24) dans une direction d'expansion et de contraction de l'élément sensible à la pression, et
dans lequel les moyens de réglage sont pourvus d'un élément d'arrêt (29) qui est configuré pour arrêter mécaniquement le mouvement de l'élément de réglage (24) par l'actionneur (40) et peuvent être réglés comme point de départ lors du réglage de la force de rappel,
**caractérisée en ce que** l'actionneur (40) inclut un moteur pas à pas (41) qui entraîne les moyens de réglage, et
l'actionneur (40) est configuré pour changer la force de rappel en déplaçant d'abord l'élément de réglage (24) jusqu'à ce qu'il soit arrêté par l'élément d'arrêt (29), et en entraînant ensuite le moteur pas à pas (41) jusqu'à une position ayant une force de rappel voulue.

2. Soupape de régulation de pression (11, 91) selon la revendication 1, comportant en outre un dispositif de commande qui est configuré pour commander l'actionneur (40),
dans lequel le dispositif de commande comporte :
une portion de stockage (72) qui est configurée pour stocker deux valeurs de consigne ou plus se rapportant à la force de rappel ; et
une partie de commande (71) qui est configurée pour entraîner les moyens de réglage via l'actionneur (40),
dans laquelle la partie de commande est configurée pour entraîner les moyens de réglage via l'actionneur (40) sur la base des valeurs de consigne qui sont préalablement stockées dans la portion de stockage, et pour changer la force de rappel de l'élément sensible à la pression.

3. Soupape de régulation de pression (11, 91) selon la revendication 2, dans laquelle lorsqu'une portion d'extrémité située dans un côté éloigné du corps de soupape (17) parmi les deux portions d'extrémité de l'élément sensible à la pression est appelée portion d'extrémité de base,
les moyens de réglage incluent un élément de réglage (24) qui est disposé dans la portion d'extrémité de base de l'élément sensible à la pression,
dans laquelle les deux valeurs de consigne ou plus sont des informations mutuellement différentes concernant la position de l'élément de réglage (24) autour de la direction d'expansion et de contraction de l'élément sensible à la pression, et
dans laquelle la partie de commande est configurée pour changer la force de rappel en déplaçant l'élément de réglage (24) via l'actionneur (40) dans la direction d'expansion et de contraction de l'élément sensible à la pression.

4. Soupape de régulation de pression (11, 91) selon la revendication 1, dans laquelle l'actionneur (40) inclut un mécanisme d'alimentation à vis (36) qui est configuré pour convertir un mouvement de rotation fourni à partir du moteur électrique via un mécanisme de réduction de vitesse, en un mouvement linéaire,
dans laquelle le mécanisme d'alimentation à vis comporte :
un élément de palier (34) qui a une portion de vis femelle (34b) et est fixé au côté du corps principal de soupape ; et
un élément d'entraînement (35) qui a une portion de vis mâle (35a) venant en prise par vissage dans la portion de vis femelle et effectue un mouvement de rotation et un mouvement linéaire,
dans laquelle l'élément de réglage (24) comporte une portion de tige de guidage (26) qui est configurée pour effectuer un mouvement linéaire sans rotation par la transmission du mouvement linéaire de l'élément d'entraînement, et
dans laquelle l'élément d'arrêt est fixé à la portion de tige de guidage.
